(19) **Europäisches Patentamt**

**European Patent Office**

**Office européen des brevets**

(11) Veröffentlichungsnummer : **0 549 631 B1**

(12) EUROPÄISCHE PATENTSCHRIFT

(51) Int. Cl.⁵ : **C08F 265/04**

(45) Veröffentlichungstag der Patentschrift :
**01.06.94 Patentblatt 94/22**

(21) Anmeldenummer : **91915924.4**

(22) Anmeldetag : **12.09.91**

(86) Internationale Anmeldenummer :
**PCT/EP91/01740**

(87) Internationale Veröffentlichungsnummer :
**WO 92/05210 02.04.92 Gazette 92/08**

(54) VERFAHREN ZUR HERSTELLUNG EINES FEINTEILIGEN VINYLCHLORID-PFROPFCOPOLYMERISATS.

(30) Priorität : **17.09.90 DE 4029471**

(43) Veröffentlichungstag der Anmeldung :
**07.07.93 Patentblatt 93/27**

(45) Bekanntmachung des Hinweises auf die
Patenterteilung :
**01.06.94 Patentblatt 94/22**

(84) Benannte Vertragsstaaten :
**AT BE CH DE ES FR GB IT LI NL SE**

(56) Entgegenhaltungen :
**CH-A- 566 354**
**CH-A- 616 168**
**DE-A- 3 700 973**
**US-A- 4 719 265**

(56) Entgegenhaltungen :
**Dialog Information Services,File 350,World Patent index 63-80,dialogaccesion no.1408016,wpi accesion no 75-57725w/35,Tokuyama Sekisui KK: Ethylene-vinyl chloride graft copolymer-of uniform particle size,prepd.by suspension polymerisation ",JP 50004186,A ,7501177535 (basic)**

(73) Patentinhaber : **WACKER-CHEMIE GMBH**
**Hanns-Seidel-Platz 4**
**D-81737 München (DE)**

(72) Erfinder : **GRAUER, Peter**
**Kampenwandstr. 9**
**D-8269 Burgkirchen (DE)**
Erfinder : **OBER, Ludwig**
**Regerstr. 2**
**D-8263 Burghausen (DE)**

## Beschreibung

Die Erfindung betrifft die Herstellung eines feinteiligen Vinylchlorid-Pfropfcopolymerisats und die Verwendung des Verfahrensprodukts als Viskositätserniedriger für Plastisole bzw. als Mattierungsmittel für thermoplastische Harze und Plastisole.

In der DE-A 3132890 ist die Herstellung eines feinteiligen Vinylchloridpfropfcopolymerisats mit einem Ethylen-Vinylacetat-Copolymeren als Pfropfgrundlage beschrieben. Das Pfropfcopolymerisat wird dabei nach Auflösung des Ethylen-Vinylacetat-Festharzes unter Ausschluß von Emulgator hergestellt und eignet sich insbesondere für die Verwendung als Viskositätserniedriger in Plastisolen. Nachteilig bei dieser Verfahrensweise ist die aufwendige Festharzauflösung, die obendrein zu Inhomogenitäten bezüglich der Pfropfcopolymer-Zusammensetzung führen kann.

In der DE-A 3544235 wird eine Plastisolzusammensetzung beschrieben, die zur Viskositätserniedrigung und Mattierung ein feinteiliges, vernetztes Vinylchlorid-Pfropfcopolymerisat, mit einem Ethylen-Vinylacetat-Copolymeren als Pfropfgrundlage, enthält. Die Herstellung erfolgt ebenfalls nach dem Suspensionpolymerisationsverfahren, wobei das Ethylen-Vinylacetat-Festharz vor Beginn der Polymerisation im monomeren Vinylchlorid gelöst wird.

Die DE-A 3803036 beschreibt die Herstellung eines Vinylchlorid-Pfropfcopolymerisats mit vernetztem Polybutylacrylat als Pfropfgrundlage. Der Elastomergehalt beträgt bis zu 65 Gew.%; die Aufpfropfung des Vinylchlorids erfolgt erst nach der Koagulation des Polybutylacrylats. Die Herstellung von feinteiligen Pfropfcopolymeren des Vinylchlorids ist mit dieser Verfahrensweise nicht möglich; es resultieren grobe und irregulär geformte Polymerteilchen.

Der Erfindung lag die Aufgabe zugrunde ein Verfahren zu entwickeln, zur Herstellung eines feinteiligen Vinylchlorid-Pfropfcopolymerisats, das sich zur Verwendung als Viskositätserniedriger bzw. Mattierungsmittel eignet, unter Vermeidung der obengenannten Nachteile.

Gegenstand der Erfindung ist ein Verfahren zur Herstellung eines feinteiligen Vinylchlorid-Pfropfcopolymerisats mit einer mittleren Korngröße von 20 bis 30 μm nach dem Suspensionspolymerisationsverfahren, in Gegenwart monomerlöslicher Radikalinitiatoren und weiterer üblicher Zusatzstoffe, wie Puffersubstanzen oder Emulgatoren, dadurch gekennzeichnet, daß das Pfropfmonomere in Gegenwart von 1.0 bis 5.0 Gew.%, bezogen auf den Pfropfmonomer-Anteil,eines Alkylacrylatpolymeren, das in wäßriger Emulsion mit einem Festgehalt von 30 bis 60 Gew.% vorgelegt wird, sowie 0.1 bis 1.0 Gew.%, bezogen auf den Pfropfmonomer-Anteil, Celluloseether mit einem Methoxylgehalt von 15 bis 25 % und einem Hydroxypropylgehalt von 3 bis 10 % und mit einer Viskosität von 30 bis 150 mPa·s, nach ASTM D 2363, welches vorgelegt oder nach der Zugabe des Pfropfmonomeren dosiert wird, polymerisiert wird.

Zur Herstellung des Vinylchlorid-Pfropfcopolymerisats wird die Polyalkylacrylat-Emulsion zusammen mit dem Wasser, den Radikalinitiatoren und gegebenfalls den Puffersubstanzen und weiterer üblicher Zusatzstoffe vorgelegt. Anschließend wird das Pfropfmonomere zudosiert. Das Schutzkolloid kann sowohl in die Vorlage gegeben werden, als auch nach der Zugabe des Pfropfmonomeren zudosiert werden. Die Polymerisation wird bei einer Temperatur von 50 bis 80°C, vorzugsweise 55 bis 70°C durchgeführt. Bei einem Druckabfall von 1 bis 5 bar, vorzugsweise 3 bis 5 bar, wird die Polymerisation durch Abdestillation des nicht umgesetzten Vinylchlorids beendet. Nach der Entgasung wird das Produkt über Schleuder oder Zentrifuge entwässert und getrocknet.

Als Pfropfgrundlage werden unvernetzte Homopolymere oder vernetzte Copolymere der Acrylsäurealkylester mit $C_2$- bis $C_8$-Alkylresten eingesetzt. Beispiele hierfür sind Polyethylacrylat, Polybutylacrylat und Poly-(2-ethylhexyl)-acrylat. Als copolymere Acrylsäurealkylester werden solche eingesetzt, die 0.1 bis 1.0 Gew.%, bezogen auf den Acrylsäurealkylesteranteil, mehrfach ethylenisch ungesättigte, vernetzend wirkende Comonomere enthalten. Beispiele hierfür sind Vinyl- und Allylester ungesättigter $C_3$- bis $C_8$- Monocarbonsäuren, wie Allylmethacrylat; Mono- oder Di-Vinyl- und -Allylester von gesättigten oder ungesättigten $C_4$- bis $C_{10}$-Dicarbonsäuren, beispielsweise Diallylphthalat; sowie Di(meth)acryl- und Tri(meth)acrylester mehrwertiger Alkohole, Diethylenglykoldimethacrylat oder Trimethylolpropantrimethacrylat; Triallylcyanurat und andere Allylether polyfunktioneller Alkohole. Vorzugsweise werden als Pfropfgrundlage vernetzte Copolymere der Acrylsäurealkylester eingesetzt. Besonders bevorzugt wird mit 0.1 bis 1.0 Gew.% Allylmethacrylat vernetztes Polybutylacrylat eingesetzt. Bezogen auf das Pfropfmonomere werden 1 bis 5 Gew.%, vorzugsweise 1 bis 3 Gew.%, des Acrylsäurealkylester-Polymeren eingesetzt.

Die Herstellung der Pfropfgrundlage erfolgt in an sich bekannter Weise im Emulsionspolymerisationsverfahren. Zur Herstellung des Pfropfcopolymeren wird das unvernetzte oder vernetzte Acrylsäurealkylester-Polymer als wäßriger Latex mit einem Festgehalt von 30 bis 60 Gew.% eingesetzt. In einer bevorzugten Ausführungsform wird der wäßrige Latex vor dem Einsatz im erfindungsgemäßen Herstellungsverfahren mit 0.01 bis 0.5 Gew.%, bezogen auf den Pfropfmonomeranteil, anionischem Emulgator versetzt. Als anionische Emulgatoren eignen sich Alkylsulfate mit 8 bis 18 C-Atomen, Alkylsulfonate mit 8 bis 18 C-Atomen, Alkali- und Ammoniumsalze von Carbonsäuren mit 8 bis 20 C-Atomen, sowie Phosphorsäureteilester und Alkyletherphosphate. Vorzugsweise werden Alkylsulfonate und Alkylsulfate mit 8 bis 18 C-Atomen verwendet.

Als Pfropfmonomer wird Vinylchlorid eingesetzt. Es können aber auch bis zu 20 Gew.% mit Vinylchlorid copolymerisierbare Monomere, wie Vinylester aliphatischer Monocarbonsäuren mit 2 bis 12 C-Atomen oder (Meth)acrylsäure-alkylester mit $C_2$- bis $C_{12}$-Alkylrest eingesetzt werden. Zur Herstellung vernetzter Pfropfcopolymerisate können der Pfropfmonomerphase bis zu 10 Gew.%, vorzugsweise 0.01 bis 5.0 Gew% der obengenannten mehrfach ethylenisch ungesättigten, vernetzend wirkenden Comonomere zugegeben werden. Vorzugsweise enthält die Pfropfmonomerphase 0.01 bis 5.0 Gew.% Triallylcyanurat.

Als Schutzkolloid werden 0.1 bis 1.0 Gew.%, bezogen auf den Pfropfmonomer-Anteil, Celluloseether mit einem Methoxyl-Gehalt von 15 bis 25 % und einem Hydroxypropylgehalt von 3 bis 10 % und einer Viskosität von 30 bis 150 mPa·s, nach ASTM D 2363, eingesetzt. Das Schutzkolloid wird vorzugsweise in wäßriger Lösung mit einem Gehalt von 1 bis 5 Gew.% zudosiert.

Als Initiatoren werden monomerlösliche Radikalbildner aus der Gruppe der Peroxide oder Azoinitiatoren eingesetzt. Beispiele für gebräuchliche Peroxide sind Dialkyl-, Diacyl und Diaroylperoxide, wie Dilauroyl- oder Diacetylperoxid; oder Peroxodicarbonate, wie Di-tert.-butylcyclohexylperoxodicarbonat und Dicetylperoxodicarbonat; oder Perester. Gebräuchliche Azoinitiatoren sind Azobisisobutyronitril oder Azobisdimethylvaleronitril. Gegebenenfalls können die peroxidischen Initiatoren auch im Gemisch mit Reduktionsmittel eingesetzt werden. Vorzugsweise werden die Initiatoren in einer Menge von 0.01 bis 1.50 Gew.%, bezogen auf die Pfropfmonomeren eingesetzt.

Als Puffersubstanzen werden üblicherweise Natriumcarbonat, Natriumhydrogenphosphat, Alkaliphosphate und Alkaliacetate in Konzentrationen von 0.005 bis 0.5 Gew.%, bezogen auf das Pfropfmonomere, eingesetzt.

Weitere bei der Polymerisation übliche Zusatzstoffe sind etwa Regler zur Einstellung des K-Werts des Pfropfprodukts, wie Chlorkohlenwasserstoffe, beispielsweise Dichlorethylen, Trichlorethylen, Chloroform, oder aliphatische Aldehyde, die in Mengen bis zu 5 Gew.%, bezogen auf die Pfropfmonomeren, eingesetzt werden.

Mit dem erfindungsgemäßen Verfahren werden Vinylchlorid-Pfropfcopolymerisate zugänglich, die sich durch ein sehr feines Korn mit einer mittleren Korngröße von 20 bis 30 μm und eine enge Korngrößenverteilung auszeichnen.

Die erfindungsgemäßen Vinylchlorid-Pfropfcopolymerisate eignen sich vor allem für die Verwendung als viskositätserniedrigender Zusatz in Plastisolzusammensetzungen und für die Verwendung als Mattierungsmittel für thermoplastische Harze und Plastisole.

Zur Modifizierung der Pastenviskosität werden 5 bis 50 Gew.%, bezogen auf das Gesamtpolymer in der Paste, des erfindungsgemäßen Vinylchlorid-Pfropfcopolymerisats eingesetzt. Vorzugsweise enthält das Pfropfcopolymerisat 1 bis 5 Gew.% mit 0.1 bis 1.0 Gew.% Allylmethacrylat, bezogen auf die Pfropfgrundlage, vernetztes Polybutylacrylat und 95 bis 99 Gew.% Vinylchlorid. Zur Modifizierung wird das Pfropfcopolymerisat in der oben angegebenen Menge zu für die Pastenverarbeitung geeignetem Polyvinylchlorid, üblicherweise Emulsions- oder Mikrosuspensions-PVC in einer Menge von vorzugsweise 50 bis 95 Gew.%; und Weichmacher, zum Beispiel auf Basis von Dicarbonsäure- und Phosphorsäureestern, in einer Menge von 20 bis 200 Gew.%, bezogen auf den Gesamtpolymeranteil; und gegebenenfalls weiteren Zusatzstoffen, wie etwa Licht- und Wärmestabilisatoren, Pigmente und Füllstoffen, in bekannter Weise zugemischt. Die Herstellung und Zusammensetzung von PVC-Plastisolen ist beispielsweise beschrieben in H. Kainer, Polyvinylchlorid und Vinylchlorid-Mischpolymerisate, Springer-Verlag, Berlin - Heidelberg - New York (1965).

Eines der Hauptanwendungsgebiete für PVC-Plastisole ist die Herstellung von Beschichtungen auf Trägermaterialien nach dem Streichverfahren, beispielsweise die Beschichtung von Geweben oder Papier. Aufgrund des sehr feinen Korns der erfindungsgemäß hergestellten Vinylchlorid-Pfropfcopolymerisate, eignen sich damit modifizierte Plastisole vor allem zur Herstellung von dünnen Schichten nach dem Streichverfahren, zum Beispiel bei der Tapetenbeschichtung.

Bei der Verwendung als Mattierungsmittel für thermoplastische Harze, wie zum Beispiel Polyvinylchlorid oder Mischpolymerisate des Vinylchlorids bzw. Pfropfcopolymerisate des Vinylchlorids, werden 1 bis 50 Gew.%, bezogen auf den Gesamtpolymergehalt, des erfindungsgemäßen Vinylchlorid-Pfropfcopolymerisats eingesetzt. Vorzugsweise werden bei der thermoplastischen Verarbeitung 2 bis 10 Gew.%, bei der Plastisol-Verarbeitung des zu mattierenden Harzes 10 bis 50 Gew.% eingesetzt. Besonders geeignet zum Einsatz als Mattierungsmittel sind vernetzte Vinylchlorid-Pfropfcopolymerisate mit einem Gehalt von 0.01 bis 5.0 Gew.% an mehrfach ethylenisch ungesättigten, vernetzend wirkenden Comonomeren in der Pfropfmonomerphase. Insbesonders vernetzte Vinylchlorid-Pfropfcopolymerisate mit vernetzter Polyacrylat-Pfropfgrundlage.

Die Rezepturen für die Hart-, die Weich- und die Plastisolverarbeitung von thermoplastischen Harzen, speziell von VC-Polymerisaten sind allgemein bekannt. Es sei nur erwähnt, daß selbstverständlich die jeweils üblichen Zusätze auch erfindungsgemäß mitverwendet werden können, zum Beispiel Weichmacher, etwa auf Basis von Dicarbonsäure- und Phosphorsäureester, Licht- und Wärmestabilisatoren, zum Beispiel auf Zn-, Cd-, Ba-, Sn-, Pb-, Ca-Basis, Verarbeitungshilfen zum Beispiel auf Acrylatbasis, Gleitmittel, Schlagzähmodifier, Pigmente oder Füllstoffe. Diese Zusätze können in den üblichen Mengen verwendet werden.

Aufgrund des sehr feinen Korns der erfindungsgemäßen Vinylchlorid-Pfropfcopolymerisate erhält man einen bei visueller Beurteilung hervorragenden, sehr einheitlichen Mattierungseffekt. Vor allem bei den vernetzten Vinylchlorid-Pfropfcopolymerisaten ist dieser Mattierungseffekt wegen deren stabilen Scherverhaltens praktisch unabhängig von den üblichen Verarbeitungsbedingungen.

Die erfindungsgemäß hergestellten Vinylchlorid-Pfropfcopolymerisate lassen sich in der thermoplastischen Verarbeitung, sowohl mit Kalander, als auch in der Weichextrusion und im Spritzguß verwenden.

Die nachfolgenden Beispiele dienen der weiteren Erläuterung der Erfindung:

Beispiele 1 bis 8 (Tabelle 1):

In einem 2.5 m³ Technikumsautoklaven wurden das Wasser zusammen mit Puffersubstanzen und der in Tabelle 1 angegebenen Menge an Initiator und Vernetzer vorgelegt. Die Pfropfgrundlage wurde, nach Zugabe der entsprechenden Menge an Emulgator zum Latex, zur Vorlage zudosiert. Anschließend wurde das Vinylchlorid aufgepreßt und danach das Schutzkolloid in 3 %-iger wäßriger Lösung zudosiert. Die Polymerisation wurde bei einer Temperatur von 59°C bis zu einem Druckabfall von 3 bar durchgeführt. Abschließend wurde der Ansatz entgast und das Polymerisat abfiltriert und getrocknet.

Als Pfropfgrundlage wurde Polybutylacrylat, vernetzt mit 0.175 Gew.% Allylmethacrylat, als 40 %-iger wäßriger Latex eingesetzt.

Die Pfropfmonomerphase wurde in den Beispielen mit TAC = Triallylcyanurat vernetzt.

MHPC =   Methylhydroxypropylcellulose mit einem Methoxylsubtitutionsgrad von 23 % , einem Hydroxypropylsubstitutionsgrad von 7 % und einer Viskosität von 100 mPa·s

Als Emulgatoren wurden den Polyacrylat-Latices zugesetzt:

Mersolat® K30 =   Gemisch verschiedener Paraffinsulfonate mit einer mittleren Kettenlänge von 14-15 C-Atomen der Bayer AG.

Texapon® K12 =   Natriumlaurylsulfat der Fa. Henkel KGaA

Als Initiatoren wurden verwendet:

CEPC = Dicetylperoxodicarbonat, LPO = Lauroylperoxid

Vergleichsbeispiele A bis E (Tabelle 2):

Vergleichsbeispiel A:

Es wurde analog Beispiel 2 vorgegangen, aber ohne Vorlage der Pfropfgrundlage ein konventionelles Vinylchlorid-Suspensionspolymerisat ohne Zusatz von Emulgator hergestellt. Aufgrund des gröberen Korns der Produkte des Vergleichsbeispiels A im Vergleich zu Beispiel 2 ist die Auftragung von dünnen Schichten nicht möglich.

Vergleichsbeispiel B:

Es wurde analog Beispiel 1 vorgegangen, aber, in Anlehnung an die als Stand der Technik diskutierten Verfahrensweisen, als Pfropfgrundlage ein Ethylen-Vinylacetat-Festharz mit einem Vinylacetatgehalt von 45 Gew.% eingesetzt.

Vergleichsbeispiel C:

Es wurde analog Beispiel 1 vorgegangen, aber ohne Vorlage einer Pfropfgrundlage, unter Zusatz von Emulgator, ein konventionelles Vinylchlorid-Suspensionspolymerisat hergestellt.

Vergleichsbeispiel D:

Es wurde analog Beispiel 5 vorgegangen, aber ohne Zusatz einer Pfropfgrundlage und ohne Emulgatorzusatz ein mit Triallylcyanurat vernetztes Suspensions-PVC hergestellt. Im Vergleich zu Beispiel 5 ist der Mattierungseffekt stark abhängig von den Verarbeitungsbedingungen demonstriert mit einer Kalanderfolie, wobei die Formmasse mit einem Extruder im Vergleich zu einer Mischwalze vorplastifiziert wurde. Das grobe Korn der Produkte des Vergleichsbeispiels D führt bei der Extruderverarbeitung zu einer unbefriedigenden Oberflächenstrukturierung.

Vergleichsbeispiel E:

Vorgehensweise analog Vergleichsbeispiel D, aber mit der doppelten Menge an Triallylcyanurat. Wegen des groben Korns erhält man einen unbefriedigenden Matteffekt mit grober Oberflächenstrukturierung.

Die Ergebnisse der Bestimmung des unlöslichen Anteils und der Prüfungen zur Weichmacheraufnahme und Pastenviskosität sind in Tabelle 3 und 4 zusammengefaßt:

Unlöslicher Anteil:

Zur Bestimmung des unlöslichen Anteils wurde eine Probe von 1 g im Soxhlet-Extraktor eingewogen und 24 Stunden lang mit 500 ml THF unter Rückfluß extraniert. Die THF-Phase wurde isoliert, das THF abdestilliert und der im THF gelöste Anteil gewogen.

Weichmacher-Aufnahme:

Die Bestimmung der Weichmacheraufnahme erfolgte nach dem Zentrifugierverfahren gemäß DIN 53417 Teil 1.

Pastenviskosität:

Zur Bestimmung der Pastenviskosität wurden Pasten der folgenden Rezeptur hergestellt:
50 Teile Vinnol® P 70 (Mikrosuspensions-PVC mit K-Wert 70 der Wacker-Chemie) wurden mit 50 Teilen Versuchsprodukt und 50 Teilen Dioctylphthalat verpastet und bei 25°C temperiert.
Nach 4 Stunden wurde die Viskosität mit dem Brookfield-Viskosimeter bei 10 U/min bestimmt.
Die Ergebnisse zur Bestimmung des Mattierungseffekts sind in Tabelle 5 zusammengefaßt:
Die mattierende Wirkung wurde sowohl für die Hartverarbeitung, die Weichverarbeitung, wie für die Pastenverarbeitung bestimmt.
Es wurden folgende Rezepturen eingesetzt:

Hartverarbeitung:

100 Teile Vinnol® Y 60 MS (Masse-PVC mit K-Wert 60 der Wacker-Chernie) wurden mit 10 Teilen Versuchsprodukt, 1.5 Teilen Irgastab® 17 MOK (Octylzinnmercaptid der Fa. Ciba-Geigy), 0.5 Teilen Loxiol® G 16 (Glycinmonooleat der Fa. Henkel KGaA) und 0.5 Teilen Gleitmittel Wachs (Montansäureester der Hoechst AG) vermischt.

Weichverarbeitung:

100 Teile Vinnol® 70 DF (Suspensions-PVC mit K-Wert 70 der Wacker-Chemie) wurden mit 10 Teilen Versuchsprodukt, 40 Teilen Dioctylphthalat und 2 Teilen Irgastab® BZ. 555 (Ba/Zn-Stabilisator der Fa. Ciba-Geigy) vermischt.
Die Vorplastifizierung der Gemische wurde sowohl in der Hartverarbeitung wie in der Weichverarbeitung auf der Mischwalze bei 165°C bzw. am Plastifizier-Extruder bei 160 bis 175°C durchgeführt. Schließlich wurden die Gemische zu 200 µm dicken Folien kalandriert..

Pastenverarbeitung:

Die Pasten wurden analog der Pastenrezepturen zur Bestimmung der Plastisolviskosität hergestellt. Mit der Plastisolmasse wurde ein 200 µm dicker Aufstrich hergestellt, in der Wärme geliert, abgekühlt und an der erhaltenen Folie der Matteffekt bestimmt.
Die mattierende Wirkung wurde visuell beurteilt und folgendermaßen klassifiziert:
0 = glänzende Oberfläche,
1 = matte Oberfläche, keine mit dem Auge erkennbaren Oberflächenstrukturen,
2 = matte Oberfläche, feine Oberflächenstrukturierung,

3 = matte Oberfläche, gröbere Oberflächenstrukturierung,
4 = glänzende Oberfläche, grobe "sandgestrahlte" Oberflächenstrukturierung.

EP 0 549 631 B1

TABELLE 1:

| Teile | Bsp.1 | Bsp.2 | Bsp.3 | Bsp.4 | Bsp.5 | Bsp.6 | Bsp.7 | Bsp.8 |
|---|---|---|---|---|---|---|---|---|
| Pfropfgrundl. | 3.0 PBuA | 3.0 PBuA | 3.0 PBuA | 3.0 PBuA | 3.0 PBuA | 3.0 PBuA | 2.0 PBuA | 1.0 PBuA |
| Vinylchlorid | 100 | 100 | 100 | 100 | 100 | 100 | 100 | 100 |
| Vernetzer | – | – | 0.02 TAC | 0.10 TAC | 0.20 TAC | 0.40 TAC | 0.20 TAC | 0.20 TAC |
| Wasser | 140 | 140 | 140 | 140 | 140 | 140 | 140 | 140 |
| Schutzkolloid | 0.58 MHPC | 0.58 MHPC | 0.58 MHPC | 0.63 MHPC | 0.58 MHPC | 0.58 MHPC | 0.63 MHPC | 0.63 MHPC |
| Emulgator | 0.06 K30 | – | 0.06 K30 | 0.06 K30 | 0.06 K30 | 0.06 K30 | 0.04 K30 | 0.02 K30 |
| Initiator | CEPC/LPO 0.06/0.03 | CEPC/LPO 0.06/0.03 | CEPC/LPO 0.06/0.03 | CEPC/LPO 0.06/0.03 | CEPC/LPO 0.06/0.03 | CEPC/LPO 0.06/0.03 | CEPC/LPO 0.06/0.03 | CEPC/LPO 0.06/0.03 |
| Polytemp.(°C) | 59 | 59 | 59 | 59 | 59 | 59 | 59 | 59 |

TABELLE 2:

| | V.bsp.A | V.bsp.B | V.bsp.C | V.bsp.D | V.bsp.E |
|---|---|---|---|---|---|
| Pfropfgrundlage (Teile) | – | 5.0 VAE | – | – | – |
| Vinylchlorid (Teile) | 100 | 100 | 100 | 100 | 100 |
| Vernetzer (Teile) | – | – | – | 0.20 TAC | 0.40 TAC |
| Wasser (Teile) | 140 | 140 | 140 | 140 | 140 |
| Schutzkolloid (Teile) | 0.58 MHPC | 0.30 MHPC | 0.58 MHPC | 0.58 MHPC | 0.58 MHPC |
| Emulgator (Teile) | – | 0.15 K12 | 0.06 K30 | – | – |
| Initiator (Teile) | CEPC/LPO 0.08/0.03 | LPO 0.08 | CEPC/LPO 0.06/0.03 | CEPC/LPO 0.06/0.03 | CEPC/LPO 0.06/0.03 |
| Polym.temp. (°C) | 59 | 60 | 59 | 59 | 59 |

EP 0 549 631 B1

TABELLE 3:

| | Bsp. 1 | Bsp. 2 | Bsp. 3 | Bsp. 4 | Bsp. 5 | Bsp. 6 | Bsp. 7 | Bsp. 8 |
|---|---|---|---|---|---|---|---|---|
| Mittlerer Korndurchmesser ($\mu$m) | 28 | 26 | 28 | 25 | 27 | 27 | 29 | 27 |
| Unlöslicher Anteil (%) | 4 | 4 | 4 | 17 | 55 | 80 | 55 | 56 |
| Weichmacheraufnahme (%) | 19.5 | 7.3 | 17.9 | 13.0 | 22.1 | 31.4 | 12.1 | 9.0 |
| Plastisol-Viskosität (Pa·s) | 10.5 | 2.2 | 7.9 | | 14.8 | | | |

EP 0 549 631 B1

EP 0 549 631 B1

TABELLE 4:

| | V.bsp.A | V.bsp.B | V.bsp.C | V.bsp.D | V.bsp.E |
|---|---|---|---|---|---|
| Mittlerer Korndurchmesser ($\mu$m) | 36 | 15 | 30 | 37 | 39 |
| Unlöslicher Anteil (%) | 0 | 0 | 0 | 43 | 78 |
| Weichmacheraufnahme (%) | 8.4 | 13.8 | 19.6 | 12.3 | 10.7 |
| Plastisol-Viskosität (Pa·s) | 2.4 | 3.7 | 18.5 | | |

TABELLE 5:

| Additiv | Hartfolie | | Weichfolie | |
|---|---|---|---|---|
| | Mischwalze | Extruder | Mischwalze | Extruder |
| Bsp. 1 | 1 | 1 | 1 | 1 |
| Bsp. 2 | 1 | 1 | 1 | 1 |
| Bsp. 4 | 1 | 3 | 1 | 3 |
| Bsp. 5 | 3 | 3 | 2-3 | 3 |
| Bsp. 6 | 3 | 3 | 3 | 3 |
| Vgl.bsp. D | 1 | 4 | 1 | 4 |
| Vgl.bsp. E | 4 | 4 | 4 | 4 |

Die in den Beispielen 1, 3, 5 und Vergleichsbeispiel A hergestellten Pasten wurden wie beschrieben auf Oberflächenglanz untersucht.

Beispiel 1:          0-1
Beispiel 3:          0-1
Beispiel 5:          2
Vergleichsbeispiel A:          0

**Patentansprüche**

1. Verfahren zur Herstellung eines feinteiligen Vinylchlorid-Pfropfcopolymerisats mit einer mittleren Korngröße von 20 bis 30 μm nach dem Suspenpensionspolymerisationsverfahren, in Gegenwart monomerlöslicher Radikalinitiatoren und weiterer üblicher Zusatzstoffe, wie Puffersubstanzen oder Emulgatoren, dadurch gekennzeichnet, daß das Pfropfmonomere, Vinylchlorid oder eine Mischung von Vinylchlorid mit bis zu 20 Gew.% mit Vinylchlorid copolymerisierbarer Monomere, wie Vinylester aliphatischer Monocarbonsäuren mit 2 bis 12 C-Atomen oder (Meth)acrylsäure mit ester $C_2$ - bis $C_{12}$ - Alkylrest, in Gegenwart von 1.0 bis 5.0 Gew.%, bezogen auf den Pfropmonomer-Anteil, eines Alkylacrylatpolymeren aus der Gruppe der unvernetzten Homopolymere oder vernetzten Copolymere der Acrylsäure - alkylester mit $C_2$- bis $C_8$ Alkylresten, das in wäßriger Emulsion mit einem Festgehalt von 30 bis 60 Gew.% vorgelegt wird, sowie 0.1 bis 1.0 Gew.%, bezogen auf den Pfropfmonomer-Anteil, Celluloseether mit einem Methoxylgehalt von 15 bis 25 % und einem Hydroxypropylgehalt von 3 is 10 % und mit einer Viskosität von 30 bis 150 mPa·s, nach ASTM D 2363, welches vorgelegt oder nach der Zugabe des Pfropfmonomeren dosiert wird, polymerisiert wird.

2. Verfahren nach Anspruch 1, dadurch gekennzeichnet, daß als Pfropfmonomeres Vinylchlorid eingesetzt wird.

3. Verfahren nach Anspruch 1 oder 2 , dadurch gekennzeichnet, daß als Alkylacrylatpolymer Polybutylacrylat eingesetzt wird.

**4.** Verfahren nach Anspruch 1, 2 oder 3, dadurch gekennzeichnet, daß als Alkylacrylatpolymere solche eingesetzt werden, die 0.1 bis 1.0 Gew.%, bezogen auf den Acrylsäurealkylesteranteil, mehrfach ethylenisch ungesättigte, vernetzend wirkende Comonomere enthalten.

**5.** Verfahren nach Anspruch 1, 2, 3 oder 4 dadurch gekennzeichnet, daß mit 0.1 bis 1.0 Gew.% Allylmethacrylat vernetztes Polybutylacrylat eingesetzt wird.

**6.** Verfahren nach Anspruch 1, 2, 3, 4 oder 5, dadurch gekennzeichnet, daß die Vinylchlorid-Pfopfmonomerphase 0.01 bis 5.0 Gew.% mehrfach ethylenisch ungesättigte, vernetzend wirkende Comonomere enthält.

## Claims

**1.** Process for the preparation of a finely divided vinyl chloride graft copolymer having an average particle size of 20 to 30 $\mu$m by the suspension polymerization process in the presence of monomer-soluble free radical initiators and further conventional additives, such as buffer substances or emulsifiers, characterized in that the graft monomer, vinyl chloride or a mixture of vinyl chloride with up to 20% by weight of monomers copolymerizable with vinyl chloride, such as vinyl esters of aliphatic monocarboxylic acids of 2 to 12 C atoms or (meth) acrylates having a $C_2$- to $C_{12}$-alkyl radical is polymerized in the presence of 1.0 to 5.0% by weight, relative to the graft monomer content, of an alkyl acrylate polymer from the group of uncrosslinked homopolymers or crosslinked copolymers of alkyl acrylates having $C_2$-$C_8$-alkyl radicals which polymer is initially introduced in an aqueous emulsion having a solids content of 30 to 60% by weight, and 0.1 to 1.0% by weight, relative to the graft monomer content, of a cellulose ether having a methoxy content of 15 to 25% and a hydroxypropyl content of 3 to 10% and having a viscosity of 30 to 150 mPa·s according to ASTM D 2363, which is initially introduced or metered in after addition of the graft monomer.

**2.** Process according to Claim 1, characterized in that the graft monomer used is vinyl chloride.

**3.** Process according to Claim 1 or 2, characterized in that the alkyl acrylate polymer used is polybutyl acrylate.

**4.** Process according to Claim 1, 2 or 3, characterized in that the alkyl acrylate polymers used are those containing 0.1 to 1.0% by weight, relative to the alkyl acrylate portion, of ethylenically polyunsaturated comonomers which have a crosslinking action.

**5.** Process according to Claim 1, 2, 3 or 4, characterized in that polybutyl acrylate crosslinked with 0.1 to 1.0% by weight of allyl methacrylate is used.

**6.** Process according to Claim 1, 2, 3, 4 or 5, characterized in that the vinyl chloride graft monomer phase contains 0.01 to 5.0% by weight of ethylenically polyunsaturated comonomers having a crosslinking action.

## Revendications

**1.** Procédé de préparation d'un copolymère greffé par du chlorure de vinyle finement divisé ayant une taille de grains moyenne de 20 à 30 $\mu$m, par le procédé de polymérisation en suspension, en présence d'amorceurs radicalaires solubles dans le monomère et d'autres additifs classiques, comme des substances tampons ou des émulsionnants, caractérisé en ce que l'on polymérise le monomère de greffage, du chlorure de vinyle ou un mélange de chlorure de vinyle avec jusqu'à 20 % en masse de monomères copolymérisables avec le chlorure de vinyle, comme des esters vinyliques d'acides monocarboxyliques aliphatiques de 2 à 12 atomes de carbone ou des esters de l'acide (méth)acrylique ayant un reste alkyle en $C_2$-$C_{12}$, en présence de 1,0 à 5,0 % en masse, par rapport à la fraction de monomère de greffage, d'un polymère d'acrylate d'alkyle du groupe des homopolymères non réticulés ou des copolymères réticulés d'acrylates d'alkyle ayant des restes alkyle en $C_2$-$C_8$, qui est introduit au préalable en une émulsion aqueuse ayant une teneur en matière solide de 30 à 60 % en masse, ainsi que de 0,1 à 1,0 % en masse, par rapport à la fraction de monomère de greffage, d'un de cellulose ayant une teneur en méthoxy de 15 à 25 % et une teneur en hydroxypropyle de 3 à 10 % et une viscosité de 30 à 150 mPa·s, selon la norme ASTM D 2363, qui est introduit au préalable ou qui est ajouté de façon dosée après l'addition du monomère de greffage.

2. Procédé selon la revendication 1, caractérisé en ce que l'on utilise du chlorure de vinyle comme monomère de greffage.

3. Procédé selon la revendication 1 ou 2, caractérisé en ce que l'on utilise du poly(acrylate de butyle) comme polymère d'acrylate d'alkyle.

4. Procédé selon la revendication 1, 2 ou 3, caractérisé en ce que, comme polymères d'acrylate d'alkyle, on utilise ceux qui contiennent 0,1 à 1,0 % en masse, par rapport à la fraction d'acrylate d'alkyle, de comonomères réticulants à plusieurs insaturations éthyléniques.

5. Procédé selon la revendication 1, 2, 3 ou 4, caractérisé en ce que l'on utilise du poly(acrylate de butyle) réticulé avec 0,1 à 1,0 % en masse de méthacrylate d'allyle.

6. Procédé selon la revendication 1, 2, 3, 4 ou 5, caractérisé en ce que la phase du monomère de greffage chlorure de vinyle contient 0,01 à 5,0 % en masse de comonomères réticulants à plusieurs insaturations éthyléniques.